# EUROPÄISCHE PATENTSCHRIFT

(11) **EP 2 700 075 B1**
(45) Veröffentlichungstag und Bekanntmachung des Hinweises auf die Patenterteilung: **20.01.2016**
(21) Anmeldenummer: 13710799.1
(22) Anmeldetag: 27.02.2013
(51) Int. Cl.: G21C 15/28, C23F 11/00, F01D 25/00, G21C 17/022, G21C 1/00, G21D 1/00, B08B 9/032, C23F 11/14, F22B 37/56, F22B 37/48

(54) **VERFAHREN ZUR KONDITIONIERUNG EINES DER ENERGIEERZEUGUNG DIENENDEN KREISLAUFSYSTEMS EINES KRAFTWERKS**
METHOD FOR CONDITIONING A POWER-GENERATING CIRCULATORY SYSTEM OF A POWER PLANT
PROCÉDÉ DE CONDITIONNEMENT D'UN SYSTÈME DE CIRCUIT DE GÉNÉRATION D'ÉNERGIE D'UNE CENTRALE NUCLÉAIRE

(30) Priorität: 28.02.2012 DE 102012203010
(43) Veröffentlichungstag der Anmeldung: 26.02.2014
(73) Patentinhaber: AREVA GmbH, 91052 Erlangen (DE)
(72) Erfinder: RAMMINGER, Ute, 91154 Roth (DE); FANDRICH, Jörg, 90587 Obermichelbach (DE); ROUMIGUIÉRE, Fernando-Mario, 91058 Erlangen (DE)
(74) Vertreter: Meissner, Bolte & Partner GbR
(86) Internationale Anmeldenummer: PCT/EP2013/053921
(87) Internationale Veröffentlichungsnummer: WO 2013/127844

(56) Entgegenhaltungen:
- DD-A1- 107 962
- JP-A- 2011 033 301
- US-A- 4 999 161

## Beschreibung

Die Erfindung betrifft ein Verfahren zur Konditionierung eines der Energieerzeugung dienenden Kreislaufsystems eines Kraftwerks. Unter einem solchen Kreislaufsystem ist beispielsweise der Primär- und Sekundärkreislauf eines Druckwasserreaktors, der Kühlmittelkreislauf eines Siedewasserreaktors und der Wasserdampfkreislauf eines konventionellen Kraftwerks zu verstehen. Unter dem Begriff "Konditionierung" ist hier eine Maßnahme zu verstehen, mit der die Oberflächen der Komponenten des Kreislaufsystems vor Korrosion geschützt werden. Wenn von Oberflächen gesprochen ist, so sind damit zum Einen die inneren Oberflächen beispielsweise von Leitungen, Wärmetauschern und Behältern und zum Anderen von einem Arbeitsmedium (Wasser, Dampf) des Kreislaufsystems umströmte Oberflächen von Bauteilen wie etwa Turbinenschaufeln gemeint. Beispielsweise aus der DE-Offenlegungsschrift 2625607 und dem DD-Patent 107962 sind Verfahren bekannt, bei denen in den Sekundärkreislauf bzw. dem Wasserdampf-Kreislauf von Druckwasserreaktoren während des Leistungsbetriebes filmbildende Amine (FFA = film forming amines) dosiert werden.

Ziel einer Konditionierung der in Rede stehenden Art ist es, einen möglichst durchgängigen dünnen, maximal ein bis zwei Molekülschichten dicken Film auf den Oberflächen zu erzeugen. Dabei besteht bei den herkömmlichen Verfahren jedoch die Gefahr, dass sich dickere FFA-Ablagerungen bilden, welche einerseits den Betriebsablauf stören, indem sie beispielsweise den Wärmetransport in Dampferzeugern oder anderen Wärmetauschern verringern oder Strömungsquerschnitte verengen. Außerdem besteht die Gefahr, dass sich Teile der Ablagerungen lösen und Turbinenschaufeln beschädigen oder mechanische Filteranlagen und Ionentauscher zusetzen, so dass diese ausgetauscht werden müssen.

Aufgabe der Erfindung ist es, ein Verfahren vorzuschlagen, mit dem die geschilderten Nachteile vermieden werden.

Diese Aufgabe wird bei einem Verfahren der eingangs genannten Art dadurch gelöst, dass - vorzugsweise während des Leistungsbetriebes - dem im Kreislaufsystem zirkulierenden Arbeitsmedium ein Amin zudosiert wird, welches als Filmbildner wirkt und auf den mit dem Arbeitsmedium in Berührung stehenden Oberflächen des Kreislaufsystems einen hydrophoben Film bildet. Das Verfahren wird dabei so durchgeführt, dass praktisch zu jedem Verfahrenszeitpunkt eine Kontrolle über die Konzentration des Filmbildners bzw. den Fortgang der Filmbildung gegeben ist. Dies wird dadurch erreicht, dass während der Dauer des Verfahrens die Konzentration des Filmbildners an wenigstens einem Messpunkt durch Messungen überwacht wird. Der Filmbildner wird dabei so dosiert, dass sich in der Wasserphase des Wasser-Dampf-Kreislaufs, zumindest im Dampferzeuger-Speisewasser, eine Konzentration von 1 bis 2 ppm, vorzugsweise von 1 bis 1,5 ppm, ergibt. Wenn innerhalb dieser Grenzen, insbesondere mit maximal bis 1,5 ppm Filmbildner gearbeitet wird, kann die Ausbildung dicker Schichten des Filmbildners vermieden werden. Es hat sich darüber hinaus gezeigt, dass in vielen Fällen bereits ein ausreichender Film auf den Oberflächen vorhanden ist, wenn die vorgenannte Konzentration bzw. Zielkonzentration erreicht ist.

Mit größerer Zuverlässigkeit wird jedoch auf den Oberflächen ein diese im Wesentlichen vollständig überdeckender einlagiger bzw. im Wesentlichen monomolekularer Film erhalten, wenn das Verfahren erfindungsgemäß unter den oben erwähnten Prämissen so lange fortgesetzt wird, bis die Konzentration des Filmbildners - bei konstanter Dosierrate - an mehreren über den Wasser-Dampf-Kreislauf verteilten Messpunkten im zeitlichen Mittel gesehen an mehreren Messpunkten (M1, M2, M3) gleich bleibt, wenn sich also an den Messpunkten eine Gleichgewichtskonzentration einstellt. Unter dem zeitlichen Mittel ist der Trendverlauf zu verstehen, der sich ergibt, wenn messtechnisch bedingte Schwankungsbreiten durch geeignete Verfahren der klassischen Fehlerrechnung eliminiert wurden.

Die oben schon erwähnten Messpunkte sind im Falle eines Wasser-Dampf-Kreislaufs so verteilt, dass wenigstens ein Messpunkt sich im Einphasengebiet und wenigstens ein Messpunkt sich im Zweiphasengebiet des Kreislaufs befindet.

Das Verfahren wird bei einer bevorzugten Variante so durchgeführt, dass praktisch zu jedem Verfahrenszeitpunkt eine Kontrolle nicht nur über die Konzentration des Filmbildners bzw. den Fortgang der Filmbildung, sondern auch über die Auswirkungen der Filmbildner-Dosierung hinsichtlich dadurch mobilisierter Verunreinigungen gegeben ist. Dies wird dadurch erreicht, dass während der Dauer des Verfahrens die Konzentration von wenigstens einer Verunreinigung sowie die Konzentration des Filmbildners gemessen und die Konzentration des Filmbildners in Abhängigkeit von der Konzentration wenigstens einer Verunreinigung verändert wird. Auf diese Weise ist gewährleistet, dass zu jedem Verfahrenszeitpunkt vorgegebene Richt- und Grenzwerte einer Verunreinigung, insbesondere einer korrosiv wirkenden ionalen Verunreinigung wie etwa Chlorid- oder Natriumionen, eingehalten bzw. nicht überschritten werden. Außerdem kann wirksam verhindert werden, dass eine an einem lokal begrenzten Oberflächenbereich des Wasser-Dampf-Kreislaufs immobilisierte Verunreinigung durch die Dosierung des Filmbildners rasch mobilisiert und in großer Menge im gesamten Kreislauf verteilt wird.

Als Gegenmaßnahme auf einen Anstieg der Konzentration einer Verunreinigung kann die Dosierrate des Filmbildners insbesondere mit Blick auf die Einhaltung von Grenzwerten verringert oder unterbrochen werden. Eine weitere Gegenmaßnahme besteht darin, die Konzentration von in das Arbeitsmedium übergetretenen Verunreinigungen zu verringern. Dies geschieht vorzugsweise dadurch, dass der Wasser-Dampf-Kreislauf gespült wird und dabei unter anderem partikelförmige Verunreinigungen durch Abschlämmen entfernt werden. Vorzugsweise erfolgt diese Maßnahme etwa aus verfahrensökomischen Gesichtspunkten im Anschluss an eine Unterbrechung der Dosierung des Filmbildners. Denkbar ist auch, dass zur Entfernung von Verunreinigungen aus dem Wasser-Dampf-Kreislauf Filter eingesetzt werden, etwa die Filteranlagen des kraftwerkseigenen Kondensat-Reinigungssystems.

Als besonders wirksam sowohl für die Reinigungswirkung als auch für die Filmbildung haben sich Monoamine mit einem 8 bis 22 Kohlenstoffatome umfassenden Kohlenwasserstoffrest heraus gestellt, wobei hier besonders Octadecylamin geeignet ist. Monoamine der vorliegenden Art liegen bei Raumtemperatur als wachsähnliche Substanz vor. Herkömmliche, daraus hergestellte Emulsionen enthalten üblicherweise relativ große Menge an organischen Emulgatoren, welche im Wasser-Dampf-Kreislauf schädliche Auswirkungen haben können. Daher wird bei dem erfindungsgemäßen Verfahren das FFA vorzugsweise in Reinform eingesetzt, nämlich als wässrige Emulsion ohne Zusatz von Emulgatoren, die durch ein rein mechanisches Vermischen unter Anwendung von erhöhter Temperatur erhalten werden können.

Das Verfahren wird nun anhand eines Ausführungsbeispiels unter Bezugnahme auf die beigefügten Abbildungen näher erläutert. Es zeigen:
Fig. 1 in stark schematisierter Ansicht den Wasser-Dampfkreislauf eines Druckwasserreaktors,
Fig. 2 ein Diagramm, das den zeitlichen Verlauf der durch eine ODA-Dosierung hervorgerufene Konzentration von ODA im Dampferzeuger-Speisewasser wiedergibt,
Fig. 3 ein Flussdiagramm einer Konditionierung.

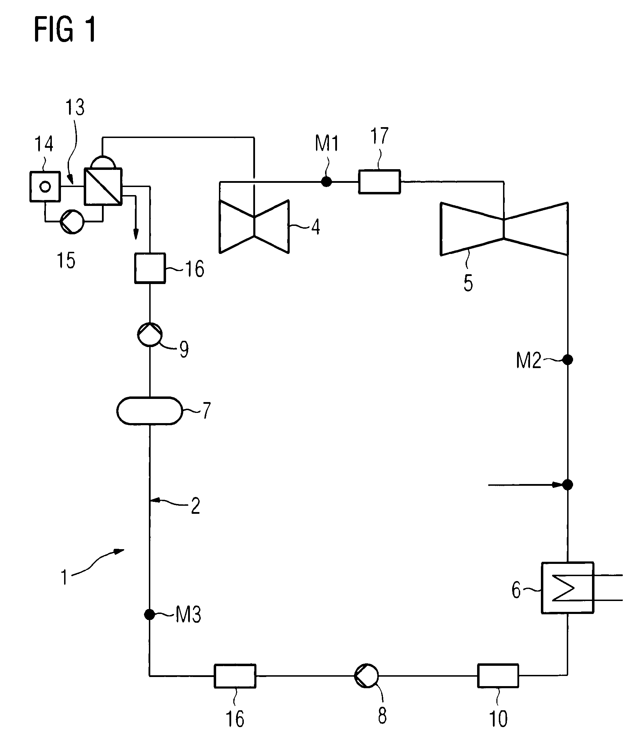

Als Beispiel für ein Kreislaufsystem wird im folgenden auf einen Wasser-Dampfkreislauf 1 (im Folgenden abgekürzt mit WDK) eines Druckwasserreaktors abgestellt. Dieser umfasst ein Rohrleitungssystem 2, mehrere Dampferzeuger 3, üblicherweise mehrere Turbinen, beispielswese eine Hochdruckturbine 4 und eine Niederdruckturbine 5, einen Wasserabschneider-Zwischenüberhitzer 17 zwischen HD und ND-Turbinen, einen Kondensator 6, einen Speisewasserbehälter 7, eine zwischen dem Kondensator 6 und dem Speisewasserbehälter 7 angeordnete Kondensatpumpe 8, mehrere Speisewasser-Vorwärmer 16 und eine zwischen dem Speisewasserbehälter 7 und dem Dampferzeuger angeordnete Speisewasserpumpe 9. Außerdem ist ein dem Kondensator 6 nachgeschaltetes Kondensatreinigungssystem 10 vorhanden, welches mechanische Filter und ebenso Ionentauscher umfassen kann. Der Dampferzeuger 3 ist primärseitig mit dem Primärkreislauf 13 des Kernreaktors verbunden, welcher den Reaktordruckbehälter 14 und eine Hauptkühlmittelpumpe 15 umfasst (Fig. 1).

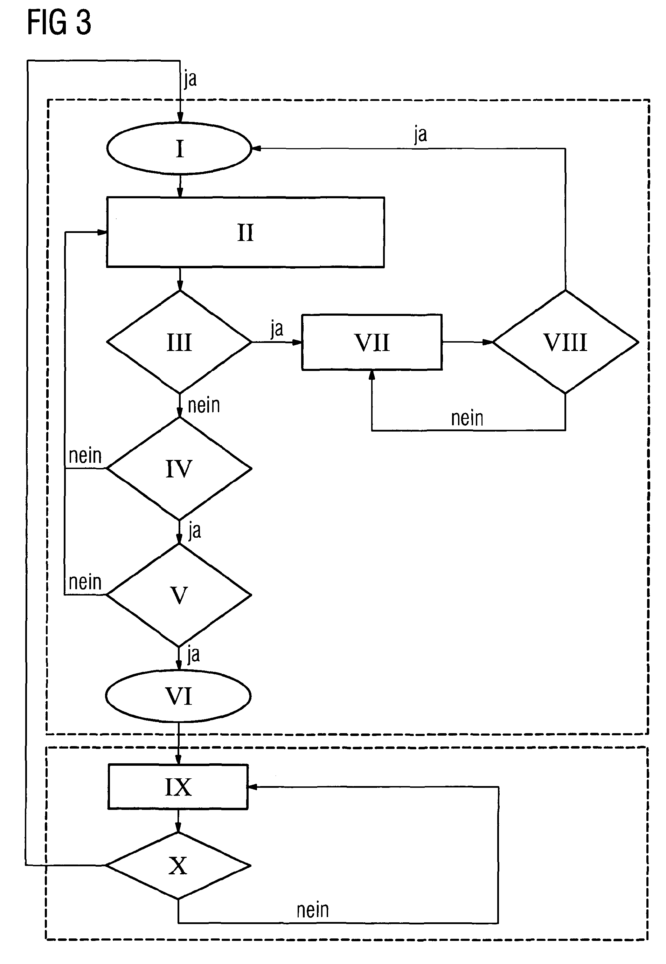

Das Reinigungs- und Konditionierungsverfahren wird, wie weiter oben bereits erwähnt, vorzugsweise während des Leistungsbetriebs durchgeführt. Darunter sind auch Phasen während des Anfahrens und Abfahrens des Kraftwerks umfasst. Bei dem im Folgenden geschilderten Ausführungsbeispiel wird die Konditionierung des Wasser-Dampf-Kreislaufs bzw. die Dosierung eines Filmbildenden Amins, im Folgenden abgekürzt mit FFA (film forming amine), nämlich von Octadecylamin (ODA), kurz vor dem Herunterfahren des Kernreaktors durchgeführt. Die von Beginn des Verfahrens an durchgeführte laufende Überwachung von Konzentrationen bzw. Konzentrationsänderungen von FFA und Verunreinigungen (siehe II in Fig. 3) erfolgt über mehreren an unterschiedlichen Positionen des WDK 1 angeordneten Messpunkten. Exemplarisch sind einige dieser Messpunkte M1, M2, M3 in Fig. 1 dargestellt.

Von Beginn der FFA-Dosierung an, ergibt sich aufgrund der tensidartigen Eigenschaften des ODA eine Mobilisierung von Verunreinigungen. Für die Konzentration dieser Verunreinigungen sind daher, wie weiter oben schon erwähnt, Grenzwerte gesetzt, die nicht überschritten werden dürfen. Die Messung der Konzentration erfolgt im Falle ionaler Verunreinigungen entweder unmittelbar, d.h. bezogen auf ein ganz bestimmtes Ion mit bekannten nasschemischen oder physikalisch-chemischen Messverfahren. Die Konzentrationsbestimmung kann aber auch mittelbar, d.h. über die durch die Mobilisierung bzw. das Übertreten von Ionen in das Arbeitsmedium hervorgerufene Erhöhung von dessen elektrischer Leitfähigkeit erfolgen. Die dabei angewendeten Messmethoden sind dem Fachmann allgemein bekannt, so dass darauf nicht eingegangen werden muss. Ein weiterer für eine kontrollierte Durchführung des Verfahrens wichtiger Parameter ist die FFA- bzw. ODA-Konzentration im Arbeitsmedium, dem im WDK vorhandenen Wasser.

Schließlich werden infolge der ODA-Dosierung auch Korrosionsprodukte freigesetzt, also feinste Partikel von Magnetit, welche an den Oberflächen haften und durch die Wirkung von ODA kolloidal in Lösung gehen. Da der überwiegende Teil an Korrosionsprodukten auf Metalloxide wie Magnetit zurückgeht, ist es im Normalfall ausreichend, wenn nur diesbezüglich Messungen durchgeführt werden. Dabei wird z.B. der Eisengehalt des Speisewassers auf bekannte Weise bestimmt und aufgrund der bekannten Stöchiometrie des Magnetits auf dessen Konzentration im Speisewasser zurückgeschlossen. Schließlich wird noch der pH-Wert überwacht, um eine Korrosion der metallischen Bauteile des WDK 1 zu verhindern. Auch ist es denkbar, dass der TOC-Wert (Total Organic Carbon) überwacht wird, um eine eventuelle Zersetzung des zudosierten ODA bei den herrschenden Bedingungen, also Temperaturen über 250°, somit die Bildung von Zersetzungsprodukten, die korrosiv wirken können, auszuschließen.

Die ODA-Dosierung bzw. die pro Zeiteinheit in den WDK 1 dosierte ODA-Menge wird - anhand der an den Messpunkten M1 bis M3 ermittelten Messdaten so geregelt, dass die Konzentrationen der aufgrund der ODA-Dosierung ins Arbeitsmedium übergetretenen Verunreinigungen Art unterhalb vorgegebener Grenzwerte bleiben (siehe III in Fig. 3). Darüber hinaus kann durch die Kontrolle der oben genannten Konzentrationswerte schon frühzeitig ein Trend erkannt werden, so dass frühzeitig eine Gegenmaßnahme eingeleitet, z.B. die ODA-Dosierung reduziert oder unterbrochen werden kann. Dabei ist zu berücksichtigen, dass sich eine Dosierungsänderung aufgrund des Wasservolumens und der Rohrleitungslänge des WDK 1 erst einige Stunden später auswirkt. Diese zeitliche Verzögerung spielt aber bei einem erfindungsgemäßen Verfahren praktisch keine Rolle, da aufgrund der permanenten ganzheitlichen Überwachung an mehreren Messpunkten M1 bis M3 eine Änderung eines kritischen Konzentrationswerts erkannt wird, noch lange bevor dieser seine kritische Grenze erreicht hat.

Um einen Anhaltspunkt zu haben, welche ODA-Mengen für einen gegebenen WDK 1 erforderlich ist, ist es zweckmäßig abzuschätzen, welche ungefähre Menge an ODA erforderlich ist, um einen monomolekularen hydrophoben Film auf den Oberflächen des WDK zu erzeugen. Diese Menge kann noch mit einem Faktor multipliziert werden, um die bei submikroskopischer Betrachtung doch erhebliche Rauhigkeit der Oberflächen sowie ODA verbrauchende Effekte, beispielsweise den Verschmutzungsgrad des WDK, zu berücksichtigen. Anhand dieser Abschätzung lässt sich bei vorgegebener ODA-Dosierrate ein definierter Zeitraum dafür angeben, in welchem ein die Oberflächen vollständig überziehender z.B. monomolekularer ODA-Film entstanden ist.

Bei Erreichen einer kritischen Konzentration einer Verunreinigung (III in Fig. 3) besteht eine wirksame Maßnahme zur Reduzierung der kritischen Konzentration in einer Unterbrechung der FFA-Dosierung und einer nachfolgenden Spülung bzw. Abschlämmung, bei der die Verunreinigung aus dem WDK ausgeschleust wird (VII in Fig. 3). Dabei wird laufend überwacht, ob die anlagenspezifischen Kontrollparameter bzw. Konzentrationen in einem zulässigen Bereich liegen (VIII in Fig. 3). Wenn dies der Fall ist, wird die Konditionierung durch Wiederaufnahme der FFA-Dosierung fortgesetzt.

Die Konzentration an ODA in der wässrigen Phase wird durch entsprechende Dosierraten so geregelt, dass dieser Wert praktisch bis zum Schluss des Verfahrens eine obere absolute Sicherheitsgrenze von 2 ppm, vorzugsweise 1,5 ppm nicht überschreitet. Dadurch wird verhindert, dass eine zu starke, über die gesetzten Grenzwerte hinaus gehende Mobilisierung von Verunreinigungen oder eine nicht mehr kontrollierbare massive ODA-Abscheidung auftritt. Auch ist sichergestellt, dass sich keine unerwünschten massiven ODA-Ablagerungen bilden. Dabei wird so dosiert, dass sich zunächst eine niedrige ODA-Konzentration ergibt, die erst gegen Ende des Verfahrens auf eine Zielkonzentration von oberhalb 1 ppm, maximal bis 1,5 ppm oder 2 ppm (C_{Target} in Fig. 1) ansteigt. Vorzugsweise wird solange zudosiert, bis die ODA-Konzentration mit steigender Tendenz die maximalen Werte von 2 ppm bzw. 1,5 ppm erreicht hat. (VI in Fig. 3).

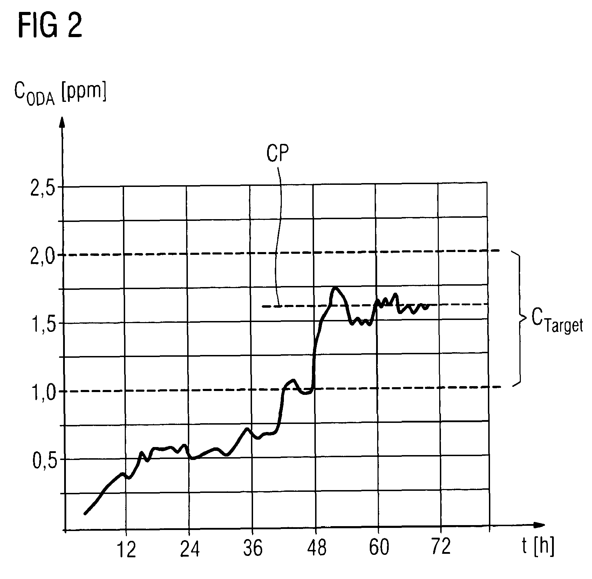

Um zu erkennen, wann sich auf den Oberflächen ein vollständiger im Wesentlichen unimolekularer Film ausgebildet, wird der Konzentrationsverlauf der ODA-Konzentration bei gleichbleibender ODA-Dosierrate beobachtet. Wenn die GleichgewichtsKonzentration des FFA an mehreren Messpunkten, vorzugsweise an allen Messpunkten M1 bis M3 erreicht ist, wenn also eine gleichbleibende oder geringfügig fallende FFA-Konzentration zu beobachten ist (V in Fig. 3), ist der Zeitpunkt erreicht, die ODA-Dosierung bzw. das Konditionierungsverfahren zu beenden (VI in Fig. 3, Linie CP in Fig. 2). Die gleichbleibende oder sinkende ODA-Konzentration gegen Ende der Filmbildung könnte darauf zurückzuführen sein, dass die Bildung von ODA-Doppel-und Mehrfachschichten kinetisch und/oder thermodynamisch begünstigt ist und daher schneller von sich geht als die anfängliche Filmbildung auf den metallischen Oberflächen des WDK 1.

Der auf die Oberflächen des WDK aufgebrachte ODA-Film kann mit der Zeit seine Wirksamkeit verlieren oder verringern, indem er sich beispielsweise teilweise von Oberflächen ablöst oder etwa thermischen oder chemischen Abbauprozessen unterliegt. Es ist daher zweckmäßig, zu gegebener Zeit eine Auffrischungskonditionierung vorzunehmen. Hierzu ist eine permanente Überwachung des Arbeitsmediums auf die Anwesenheit von Korrosionsprodukten, also mit der Bildung von Oxidationsschichten in Zusammenhang stehenden Produkten, beispielsweise von aus den Bauteilmaterialien des WDK stammenden Metallionen, zweckmäßig. Sobald ein - signifikanter - Anstieg von Korrosionsprodukten erkennbar wird (X in Fig. 3), wird eine Konditionierung der oben beschriebenen Art in Gang gesetzt.

Legende zum Flussdiagramm gem. Fig. 3:
I Start FFA-Konditionierung
II Prozess-Überwachung
   - FFA-Konzentration (M1-M3 in Fig. 1)
   - Kontrollparameter gemäß Anlagenspezifikation
III Grenzwerte Kontrollparameter erreicht?
IV Zielkonzentration FFA in M1 erreicht?
V Gleichgewichtskonzentration FFA über M1-M3 erreicht?
VI Ende FFA-Konditionierung
VII Dosierung unterbrechen, Spülen
VIII Werte der Kontrollparameter in zulässigem Bereich?
IX Prozess-Überwachung von Korrosionsprodukten
X Steigt die Konzentration von Korrosionsprodukten an?

## Patentansprüche

1. Verfahren zur Reinigung und Konditionierung des Kreislaufsystems eines Kraftwerks, insbesondere eines Kernkraftwerks, bei dem
- dem im Kreislaufsystem zirkulierenden Arbeitsmedium ein Amin als Filmbildner zudosiert wird, das auf den Oberflächen des Kreislaufsystems einen hydrophoben Film bildet, wobei
- während der Dauer des Verfahrens die Konzentration des Filmbildners an wenigstens einem Messpunkt durch Messungen überwacht wird,
**dadurch gekennzeichnet, dass**
- die Dosierung des Filmbildners beendet wird, wenn dessen Konzentration im Arbeitsmedium an zumindest einem Messpunkt (M1) einen Wert von 1 ppm bis 2 ppm erreicht hat, und die Konzentration des Filmbildners bei konstanter Dosierrate an mehreren Messpunkten (M1, M2, M3) gleich bleibt.

2. Verfahren nach Anspruch 1, **gekennzeichnet durch** eine Konzentration des Filmbildners von 1 ppm bis 1,5 ppm.

3. Verfahren nach einem der Ansprüche 1 oder 2, **dadurch gekennzeichnet, dass** während der Dauer des Verfahrens die Konzentration von wenigstens einer im Arbeitsmedium enthaltenen Verunreinigung gemessen und die Konzentration des Filmbildners in Abhängigkeit von der Konzentration der Verunreinigung verändert wird.

4. Verfahren nach Anspruch 3, **dadurch gekennzeichnet, dass** bei einer Zunahme der Konzentration der wenigstens einen Verunreinigung die Dosierrate des Filmbildners verringert wird.

5. Verfahren nach Anspruch 3 oder 4, **dadurch gekennzeichnet, dass** die Dosierung des Filmbildners unterbrochen wird, wenn sich die Konzentration der wenigstens einen Verunreinigung einem Grenzwert annähert.

6. Verfahren nach einem Ansprüche 3 bis 5, **dadurch gekennzeichnet, dass** das Kreislaufsystem einen Dampferzeuger umfasst, wobei die wenigstens eine Verunreinigung durch Abschlämmen des Dampferzeugers zumindest teilweise aus dem Kreislaufsystem entfernt wird.

7. Verfahren nach Anspruch 6, **dadurch gekennzeichnet, dass** das Abschlämmen im Anschluss an die Unterbrechung der Dosierung des Filmbildners erfolgt.

8. Verfahren nach einem der vorhergehenden Ansprüche, **dadurch gekennzeichnet, dass** im Falle eines als Wasser-Dampf-Kreislauf ausgebildeten Kreislaufsystems die Messung der Konzentration des Filmbildners an wenigstens einem Messpunkt (M1) im Zweiphasen und an wenigstens einem Messpunkt (M3) im Einphasengebiet des Wasser-Dampf-Kreislaufs erfolgt.

9. Verfahren nach einem der vorhergehenden Ansprüche, **dadurch gekennzeichnet, dass** es während des Leistungsbetriebs des Kraftwerks durchgeführt wird.

10. Verfahren nach einem der vorhergehenden Ansprüche, **dadurch gekennzeichnet, dass** als Filmbildner ein Monoamin mit einem 8 bis 22 Kohlenstoffatome umfassenden Kohlenwasserstoffrest verwendet wird.

11. Verfahren nach Anspruch 10, **gekennzeichnet durch** die Verwendung von Octadecylamin.

## Claims

1. Method for cleaning and conditioning the circulation system of a power station, in particular a nuclear power station, in which
- an amine is metered into the work medium circulating in the circulation system as a film former, said amine forming a hydrophobic film on the surface of the circulation system, wherein
- during the duration of the process, the concentration of the film former is monitored at at least one measuring point by measuring, **characterised in that**
- the dosage of the film former is ended if the concentration thereof in the work medium has reached a value of 1ppm to 2ppm at at least one measuring point (M1), and the concentration of the film former remains the same at a constant dosage rate at multiple measuring points (M1, M2, M3) .

2. Method according to claim 1, **characterised by** a concentration of the film former of 1ppm to 1.5ppm.

3. Method according to one of claims 1 or 2, **characterised in that**, during the duration of the process, the concentration of at least one impurity contained in the work medium is measured and the concentration of the film former is changed depending on the concentration of the impurity.

4. Method according to claim 3, **characterised in that** the dosage rate of the film former is reduced with an increase in the concentration of the at least one impurity.

5. Method according to claim 3 or 4, **characterised in that** the dosage of the film former is interrupted if the concentration of the at least one impurity approaches a limit value.

6. Method according to one of claims 3 to 5, **characterised in that** the circulation system comprises a steam generator, wherein the at least one impurity is at least partially removed from the circulation system by desludging the steam generator.

7. Method according to claim 6, **characterised in that** the desludging occurs after the interruption of the dosage of the film former.

8. Method according to one of the preceding claims, **characterised in that**, in the case of a circulation system formed as a water-steam circuit, the measurement of the concentration of the film former occurs in the two phase area at at least one measuring point (M1) and in the single phase area of the water-steam circuit at at least one measuring point (M3).

9. Method according to one of the preceding claims, **characterised in that** it is implemented during the power operation of the power station.

10. Method according to one of the preceding claims, **characterised in that** a monoamine having a hydrocarbon radical comprising 8 to 22 carbon atoms is used as a film former.

11. Method according to claim 10, **characterised by** the use of octadecylamine.

## Revendications

1. Procédé de nettoyage et de conditionnement du système à boucles multiples d'une centrale, en particulier d'une centrale nucléaire, dans lequel
- une amine est ajoutée, en tant qu'agent filmogène, au fluide de travail circulant dans le système à boucles multiples, laquelle amine forme un film hydrophobe sur les surfaces du système à boucles multiples, alors que
- pendant la durée du procédé, la concentration de l'agent filmogène est surveillée sur au moins un point de mesure par des mesures,
**caractérisé en ce que**
- l'addition d'agent filmogène se termine lorsque sa concentration dans le fluide de travail a atteint une valeur de 1 ppm à 2 ppm sur au moins un point de mesure (M1),
et la concentration d'agent filmogène reste la même pour un taux de dosage constant sur plusieurs points de mesure (M1, M2, M3).

2. Procédé selon la revendication 1, **caractérisé par** une concentration de l'agent filmogène de 1 ppm à 1,5 ppm.

3. Procédé selon l'une quelconque des revendications 1 ou 2, **caractérisé en ce que**, pendant la durée du procédé, on mesure la concentration d'au moins une impureté contenue dans le fluide de travail et on modifie la concentration d'agent filmogène en fonction de la concentration de l'impureté.

4. Procédé selon la revendication 3, caractérisé en qu'on réduit le taux de dosage de l'agent filmogène en cas d'augmentation de la concentration d'au moins une impureté.

5. Procédé selon la revendication 3 ou la revendication 4, **caractérisé en ce que** l'addition d'agent filmogène est interrompue lorsque la concentration d'au moins une impureté s'approche de la valeur limite.

6. Procédé selon l'une quelconque des revendications 3 à 5, **caractérisé en ce que** le système à boucles multiples comporte un générateur de vapeur, au moins une impureté étant retirée, du moins en partie, du système à boucles multiples, en purgeant le générateur de vapeur.

7. Procédé selon la revendication 6, **caractérisé en ce que** la purge est réalisée après l'interruption de l'addition d'agent filmogène.

8. Procédé selon l'une quelconque des revendications précédentes, **caractérisé en ce que**, dans le cas d'un système à boucles multiples conçu comme un circuit à eau et à vapeur, la concentration d'agent filmogène est mesurée sur au moins un point de mesure (M1) dans la zone à deux phases et au moins sur un point de mesure (M3) dans la zone à une phase du circuit à eau et à vapeur.

9. Procédé selon l'une quelconque des revendications précédentes, **caractérisé en ce qu'**il est réalisé pendant la marche en puissance de la centrale.

10. Procédé selon l'une quelconque des revendications précédentes, **caractérisé en ce qu'**on utilise, comme agent filmogène, une monoamine comprenant un groupe hydrocarbure comportant 8 à 22 atomes de carbone.

11. Procédé selon la revendication 10, **caractérisé par** l'utilisation d'octadécylamine.
